(19) Europäisches Patentamt
European Patent Office
Office européen des brevets

(11) Publication number: **0 187 044**
**A2**

(12) # EUROPEAN PATENT APPLICATION

(21) Application number: **85309490.2**

(22) Date of filing: **24.12.85**

(51) Int. Cl.⁴: **C 08 F 2/46**, C 08 F 251/02, C 08 F 299/00

(30) Priority: **28.12.84 US 687358**

(43) Date of publication of application: **09.07.86 Bulletin 86/28**

(84) Designated Contracting States: **BE DE FR GB IT NL**

(71) Applicant: **ATLANTIC RICHFIELD COMPANY, 515 South Flower Street, Los Angeles California 90071 (US)**

(72) Inventor: **Kerr II, Stuart R., 116 Kelmer Avenue, Frazer Pennsylvania 19355 (US)**
Inventor: **Kavcak, Stephen J., 1100 West Chester Pike Apt. K-12, West Chester Pennsylvania 19382 (US)**

(74) Representative: **Cropp, John Anthony David et al, MATHYS & SQUIRE 10 Fleet Street, London, EC4Y 1AY (GB)**

(54) **Radiation curable macromonomer compositions and products.**

(57) Solutions in reactive diluents of a solid thermoplastic macromonomer of of the formula $R(Z)_nX$ where R is a hydrocarbon containing up to about 20 carbon atoms, Z is a vinyl aromatic monomer, n is a positive integer such that the number average molecular weight of Z is about 2,000-50,000, and X is a polymerizable ethylenically unsaturated end group, are radiation curable to various low shrinkage products including heatsealable films, pressure sensitive adhesives, coatings, embedments, extrudates, moldings and composites such as laminates. The addition prior to curing of materials such as elastomers, tackifiers, flow control agents, oligomers or mixtures thereof further enhances the properties of the compositions.



ACTORUM AG

## RELATED APPLICATION

This application is related to a concurrently filed application of Stuart R. Kerr III entitled "Radiation Curable Macromonomer Printing Inks".

## BACKGROUND OF THE INVENTION

This invention relates to macromolecular monomer compositions which are radiation curable to a wide variety of useful products including adhesives, heat sealable films, coatings, embedments, shaped articles such as extrudates and moldings and numerous composite materials based on such products such as sheeting materials, laminates and coated articles. The invention additionally relates to radiation processes for curing the macromolecular monomer compositions, and to the resulting radiation cured products and articles.

Irradiation as a method of curing free radical polymerizable compositions has numerous advantages over heat or ambient temperature curing, including very rapid cure at ambient temperatures, the elimination of solvents along with their polluting effects and cost of recovery, elimination of direct use of fossil fuels for curing and their polluting effects, ability to coat heat-sensitive substrates, excellent properties and performance of the resulting products, and various cost saving aspects such as the ease of automation for high speed operation and high production, low capital investment and lower plant floor space requirements. Nevertheless, radiation curing often introduces its own problems such as difficulty in formulating compositions with viscosity and flow adequate for good radiation curing, toxic components, inhibition of curing by air contact and ozone generation. These problems can be substantially overcome by careful formulation of the radiation curable compositions. Accordingly, the selection of components of radiation curable compositions becomes critical if the advantages of radiation curing are to be realized and useful products obtained.

U.S. Patent 4,163,809 - McGinniss et al, discloses a radiation curable coating composition for metals comprising a mixture of an ethylenically unsaturated polymerizable binder vehicle, a pigment, 0-10% by weight of a photoinitiator and a high $T_g$(glass transition temperature) solid linear polymer containing a pendant reactive double bond. The high $T_g$ polymer is solubilized in the polymerizable material, has a molecular weight of about 1,000-50,000 and is said to enhance the adhesive properties of the composition. One end of the high $T_g$ polymer chain is crosslinkable with the binder polymer while the other end provides adhesion. During the curing the free end of the high $T_g$ polymer becomes incompatible with the resinous binder vehicle and maintains adhesion to the metal substrate. The high $T_g$ polymers of Mc Ginniss et al are produced from copolymerizable monomers by peroxy or azo catalyzed addition polymerization. In contrast, the macromolecular monomers of the present invention are prepared by anionic polymerization of a vinyl aromatic monomer to form a "living" polymer, capping of the polymer and then terminating by reaction with a material which adds a polymerizable double bond. In most applications of the invention the macromolecular monomer remains homogeneously dispersed in the reactive diluent vehicle after radiation cure. Other distinctions will become apparent from the description which follows.

Representative of patents on radiation polymerizable compositions are U.S. Patents 3,594,410 and 3,380,831 (printing and thermal transfer reproduction elements), and U.S. Patents 3,912,670, 4,025,548 4,183,796, 4,243,500, 4,360,540, and 4,404,075 (coatings and adhesives). None of these patents disclose the class of macromolecular monomers upon which the present invention is based.

European patent publication 104,046 of Minnesota Mining and Manufacturing Company, published March 3, 1984 and citing for priority U.S. application Serial No. 419,025 of Husman et al, filed September 16, 1982, describes pressure sensitive adhesive compositions prepared by free radical copolymerization of a soft acrylate backbone monomer A, an optional polar monomer B, and a macromolecular monomer C usable in the class of the present invention. Except for optional irradiation subsequent to the graft polymerization for the purpose of crosslinking the graft copolymers, no radiation curing is disclosed, and no additives are present during the copolymerization.

## SUMMARY OF THE INVENTION

It has now been found that a certain class of macromolecular monomers (hereinafter sometimes called "macromonomers"), when dissolved in one or more liquid reactive diluents, provide non-aqueous radiation curable compositions which require no inert solvent component and therefore can be 100% convertible to resin solids. This

eliminates or minimizes several substantial problems of conventional curing, namely, toxicity and/or pollution due to inert solvent, while simultaneously lowering process cost due to the absence of the solvent. In addition, most of the mass of the macromonomer component is a nontoxic vinyl aromatic material such as polymerized styrene, thus further reducing the risk of toxicity. Still further, the macromonomer component is a thermoplastic material, the thermoplasticity of which is maintainable in the final cured products but which may be moderated as desired by including, as a portion of the reactive diluent, one or more polyfunctional compounds for cross-linking to a desired degree the macromonomer chains formed as a result of the radiation curing.

Great flexibility is thus made available when formulating the radiation curable compositions of the invention. Accordingly, by selection of the components with respect to viscosity, molecular weight, crosslinkability and other properties, a wide range of thermoplasticity, thermosetting properties, elasticity, adhesiveness, clarity, hardness, durability and other properties are obtainable in the radiation cured products produced from the compositions. The radiation curable compositions of the invention are therefore readily adaptable to a variety of uses including pressure sensitive adhesives, heat sealable films, (both supported and unsupported), coatings of many types, embedments and moldings, and laminated or extruded articles. An outstanding property of the macromonomer is its ability to lower the overall shrinkage of the free-radical polymerized products based thereon. Such shrinkage is a

common occurrence in conventional systems, to the extent of 20-30% in some cases.

Briefly, the radiation curable composition of the invention is a thermoplastic macromonomer dissolved in a free radical polymerizable reactive diluent. The macromonomer is based upon a vinyl aromatic monomer, such as styrene, having a molecular weight (number average) of about 2,000 to about 50,000, and has a polymerizable ethylenically unsaturated end group. The macromonomer thus has the thermoplastic properties generally characteristic of a vinyl aromatic polymer but is capable of copolymerizing with other, lower molecular weight, monomers. By adding one or more other components to the polymerizable composition, the properties normally attributable to the cured compositions by incorporation of the additives are surprisingly enhanced, in contrast to the more conventional approach (as in pressure sensitive adhesive formulation) of first forming a cured polymeric composition and then blending desired additives into the composition.

Accordingly, one aspect of the invention is a radiation curable composition comprising a mixture of (1) a thermoplastic macromolecular vinyl aromatic monomer-based material and (2) a free radical polymerizable reactive diluent, the macromonomer being dissolved in the diluent.

In another aspect, one or more additives are blended into the mixture of macromonomer and reactive diluent with resultant enhancement, in the radiation cured products, of properties attributable to the additives.

Other aspects include a polymerization process in which the foregoing radiation curable compositions are

subjected to actinic radiation in order to cure the compositions to useful products such as adhesives, films, coatings, embedments and extruded articles, as well as the resulting cured products and articles.

DETAILED DESCRIPTION

The radiation curable composition of the invention is a mixture of the following major components, wherein the amounts are based on total composition:

(A) about 5-80% by weight of a thermoplastic macromonomer of the formula:

$$R(Z)_n X$$

wherein R is a hydrocarbon or alkoxyl group containing up to about 20 carbon atoms, Z is a vinyl aromatic monomer such as styrene, alpha-methylstyrene, nuclear-methylstyrene, indene and p-tert-butylstyrene, n is a positive integer such that the number average molecular weight of $(Z)_n$ is about 2,000-50,000, and X is a polymerizable ethylenically unsaturated end group;

(B) about 20-95% by weight of a free radical polymerizable reactive diluent or vehicle which copolymerizes with and initially also solubilizes macromonomer (A);

(C) 0 to about 10% by weight of a radiation responsive free radical initiator; and

(D) 0 to about 80% by weight of a non-reactive additive selected from an elastomer base, a tackifying resin, a flow control material, an oligomeric material, other materials or

modifiers as desired, and mixtures of two or more thereof.

Preferably, the amount of macromonomer (A) is about 10-60% by weight, the amount of reactive diluent (B) is about 40-90% by weight, the amount of the free radical initiator (C) is 0 to about 5% by weight and the amount of additive (D) is 0 to about 60% by weight, based on total composition. The more preferred compositions for curing by lower energy radiation such as ultraviolet light will contain about 0.5-6% by weight of a photoinitiator (C) and about 0.5% by weight of additive (D). Within the foregoing ranges considerable variation is possible, depending on the character and amounts of the individual components, the desired curing rate, the contribution to final properties desired from the additive component (D), and other considerations apparent to the skilled practitioner.

Macromonomer component (A) is a solid, thermoplastic material and is described together with synthesis in U.S. Patent 3,786,116 - Milkovich and Chiang, hereinafter sometimes referred to as the "Milkovich Patent". However, it is believed that macromonomers useful in the present invention may have molecular weights lower than the 5,000 molecular weight lower limit described in the Milkovich patent and may have a molecular weight distribution (also known as "polydispersity", $M_w/M_n$) greater than the 1.1 upper limit described in the Milkovich patent. Thus the molecular weight (number average) of the macromonomers of the present invention attributable to the vinyl aromatic portion of the monomer may range from about 2,000 to about 50,000, preferably from about 3,000 to about

30,000, and the molecular weight distribution may range up to about 3 or more, the preferable upper limit being about 2. Blends of the macromonomers may also be used to provide desired ranges of properties. For example, combinations of lower molecular weight materials with higher molecular materials may provide a range of crystallinity and/or thermoplasicity or compatibility with additives, not otherwise easily attained, analogous to polymer alloys.

In the macromonomer formula $R(Z)_n$ X the polymerizable end group (X) itself may be oligomeric or polymeric, or may be a straight or branched-chain group, aliphatic or aromatic, and may contain one or more oxygen atoms. Generally, X may contain up to about 250 carbon atoms. Prefered structures of X are the following:

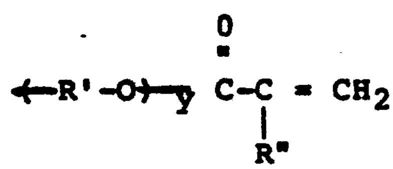

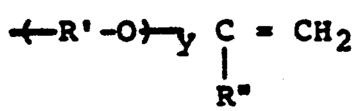

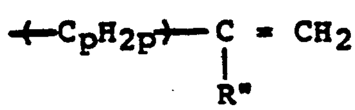

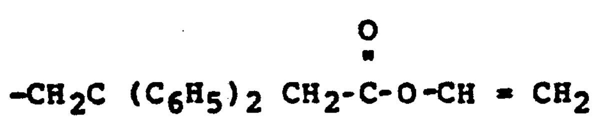

$-CH_2C_6H_4\ CH = CH_2$ and

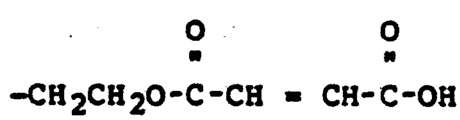

wherein R' is phenylethylene or $C_mH_{2m}$, m is 2, 3 or 4, p is a positive integer of from 2 to 8, y is a positive integer of from 1 to 50, and R" is hydrogen or lower alkyl ($C_1$-$C_8$). Most preferably X is the residue of the reaction of an ethylene oxide group with acryloyl chloride or methacryloyl chloride and is thus defined by the structure

O
‖
$-CH_2CH_2OCC = CH_2$ where R" is hydrogen or methyl.
|
R"

From the standpoint of economical synthesis and versatility of application the most preferred macromonomer is $R(Z)_nX$ wherein R is lower alkyl (preferably 4 to 8 carbon atoms), Z is styrene and X is

O
‖
$-CH_2CH_2OCC = CH_2$ where R" is hydrogen or methyl.
|
R"

Reactive diluent component (B) comprises one or more free radical polymerizable, radiation curable, substantially non-volatile, liquid monomers or oligomers of up to about 2000 molecular weight selected from monoethylenically unsaturated materials, polyethlenically unsaturated materials and mixtures thereof. The presence of amounts of polyethylenically unsaturated materials greater than about 5% by weight may introduce a degree of crosslinking in the radiation cured products which may render the products too rigid and brittle for some end uses of the present invention. However, in other applications thermosetting properties are desirable for chemical and stain resistance, higher Tg, heat and degradation resistance,

and other properties in coatings, pottants, solder resists, sealants, fiber binders, and others. In such cases a polyunsaturated material may comprise a major proportion of the reactive diluent or all of the diluent. For applications in which crystallinity must be minimized, the more suitable reactive diluents thus primarily comprise monoethylenically unsaturated liquids which are radiation polymerizable. Representative types are vinyl monomers such as the lower alkyl esters of acrylic or methacrylic acid including methyl methacrylate, ethyl acrylate, 2-ethylhexyl acrylate, butyl acrylate and isobutyl methacrylate; the corresponding hydroxyl acrylates and methacrylates such as hydroxyethyl acrylate and hydroxypropylacrylate; vinyl esters such as vinyl acetate and vinyl propionate; vinyl halides such as vinyl chloride and vinylidene chloride; and particularly high solvency monomers such as 2,2-ethoxyethoxyethyl acrylate, tetrahydrofurfuryl acrylate, n-laurylacrylate, 2-phenoxyethylacrylate, glycidyl acrylate, glycidyl methacrylate, isodecyl acrylate, isooctyl acrylate, and the like. Other monoethylenically unsaturated reactive diluents include vinyl aromatics such as styrene, alpha-methylstyrene, vinyl toluene, indene and p-tert butyl styrene; ethylenically unsaturated acids such as fumaric acid, maleic anhydride and the esters thereof; and nitrogen containing monomers such as acrylonitrile, methacrylonitrile, acrylamide, methacrylamide, N,N-dimethacrylamide, N-vinylpyrrolidine, N-vinylcaprolactam, and the like. As a general rule, the foregoing mono-unsaturated monomers will have lower Tg (as homopolymer) than

the macromonomer, but in some cases are not as reactive as the polyunsaturated monomers. Generally, also, the mono-acrylates are good viscosity reducers whereas the polyacrylates, being more reactive, are used to improve curing rate as well as to crosslink.

The polyethylenically unsaturated reactive diluents include polyol polyacrylates and polymethacrylates, such as alkane ($C_2$-$C_{16}$) diol diacrylates, aliphatic ($C_2$-$C_{16}$) polyacrylates, alkoxylated aliphatic polyacrylates such as described in U.S. Patent 4,382,135, polyether glycol diacrylates and the like. Typical of the foregoing are 1,6-hexanediol diacrylate, neopentyl glycol diacrylate, 1,3-butylene glycol diacrylate, tripropylene glycol diacrylate, polyethylene glycol 200 diacrylate and tetraethylene glycol diacrylate. Other polyunsaturated reactive diluents are allyl acrylates such as allylmethacrylate and diallylmethacrylate; acrylated epoxies, aminoplast acrylates and unsaturated polyesters; trimethylol propane based polyacrylates such as trimethylolpropane triacrylate; the pentaerythritol-based polyacrylates or polymethacrylates described in U.S. Patent 4,399,192; acrylic oligomers; acrylated polymer or oil such as acrylated epoxidized drying-type oils, acrylated bisphenol A/epoxy resins, ethoxylated bisphenol A diacrylate, acrylated urethane prepolymers (also known as "acrylated polyurethanes"), polyethers, silicones, and the like.

The reactive diluents are conventionally sold with a free radical polymerization inhibitor content ranging from about 25 to 2000 ppm. Of course, if the reactive diluents are produced at the site of radiation curing,

little or no inhibitor need be present in the diluents.

The foregoing and other reactive diluents (and inhibitors if used) are widely known and are described in the patent and other literature, such as component (1) of U.S. Patent 3,368,900, component (2) of U.S. Patents 3,380,831 and 3,594,410, the polymerizable vehicles disclosed in U.S. Patents 4,163,809 and 4,481,258, and the acrylated polymer or oils, acrylic oligomers and other radiation curable component (b) compounds disclosed in U.S. Patent 4,360,540. All of the aforementioned patents, descriptive of reactive diluents useful in the present invention, are incorporated herein by reference.

In addition to reactivity and desired degree of crosslinkability, the reactive diluents will be selected on the basis of their solvency for the macromonomer component and their contribution to the viscosity of the resulting solutions. Compositions ranging from sprayable to extrudable character can thus be prepared. Generally, the less polar the reactive diluent the greater the solvency for the macromonomer. Solvency and viscosity can be determined conveniently by preparing mixtures over a range of concentrations, noting the clarity and compatibilities, and measuring the viscosities. In those cases where solvency in a single diluent is insufficient, one or more other diluents may be added to optimize compatibility. The higher the molecular weight of the macromonomer the less soluble the macromonomer will be in some of the reactive diluents. Accordingly, molecular weight of macromonomer must be balanced with the ease with which solutions can be formed and acceptability of the resulting viscosities

and properties relative to the end uses of the compositions. If the intended end use is a coating composition, for example, lower macromonomer molecular weight, e.g., not over about 30,000, may be required in order to obtain good solvency and low viscosity in a given reactive diluent or mixture of diluents. The formulator of radiation curable compositions is well aware of all of the foregoing and other considerations and can make appropriate selections of components of the compositions and proportions by routine experimentation and judgment in order to obtain a desired balance of properties.

A non-reactive solvent may also be added to the curable compositions to provide better flow or wetting and extremely thin films, e.g., less than 0.2 mils. The solvents may be flashed off before irradiation or left in the composition during the cure. Representative non-reactive solvents are ethyl alcohol, isopropyl alcohol, methyethyl ketone, dichloromethane and other industrial solvents. Such solvent containing compositions have been found useful for imparting improved abrasion resistance to film substrates such as acetates, polycarbonate and others.

Depending upon the radiation source and wavelength used in curing the compositions, the compositions may also contain a radiation responsive free radical initiator (C). If the radiation source is high energy, such as electron beam, little or no initiator may be required. If the radiation is lower energy, e.g., ultraviolet light, if the polymerizable composition is other than in the form of a thin film, e.g., a coating, molding or extrudate, or if the composition contains components

(e.g., radiation absorbers, inhibitors) which interfere with or block the irradiation, an initiator normally will be used. The amount of initiator, when used, and the irradiation time will be dependent on the type and amounts of radiation curable components in the composition. For example, if the composition contains highly reactive diluents, the quantum and/or time of irradiation may be less. Generally, the sources of irradiation may be electron beams, gamma radiation emitters, carbon arcs, mercury vapor arcs, ultra violet light sources such as phosphors, argon glow lamps and photographic flood lamps; accelerators including Vandergraaf and Betatron linear accelerators, and the like including combinations thereof. High energy irradiation, such as electron beams, is preferred, with or without an initiator, when the curable composition is in a form other than thin film.

Initiators include any radiation responsive free-radical generating compounds known in the art for such purpose, such as the UV responsive photoinitiators 2,2-dimethoxy-2-phenyl acetophenone, 2-hydroxy-2-methyl-1-phenyl propan-1-one, benzoin, benzoin methyl ether, diphenyldisulfide, dibenzyldisulfide, benzil, benzophenone, xanthane, and various other acetophenones. Accelerators such as tertiary amines may also be added. If a higher degree of cross-linking is desired, peroxide or azo initiators may also be used, such as benzoyl peroxide, in conjunction with the free radical initiators. The foregoing and other aspects of radiation curing of polymerizable compositions are well-known and are non-critical to practice of the invention. Further details may be found in technical

articles on the subject such as "Radiation Curing" in the Encyclopedia of Chemical Technology, Ed, Kirk-Othmer, 3rd Edition, Volume 19, pages 607-624, incorporated herein by reference.

ADDITIVES

The radiation curable compositions of the invention provide useful products without additives (D). For example, a mixture of about 50 wt.% of a styrene-based macromonomer of about 13,000 molecular weight, about 48 wt.% of a reactive diluent such as 2,2-ethoxyethoxyethyl acrylate and about 2 wt.% of a photoinitiator can be applied to a suitable substrate and cured by exposure to UV radiation to form a clear, flexible, strongly adherent, tack-free film, thus demonstrating efficacy as an adhesive, coating and a film-forming material. Nevertheless, additives will improve and/or modify the useful properties of the compositions upon radiation curing to an extent which is surprising and unexpected. For reasons not fully understood the presence of additives in the radiation curable composition prior to curing as opposed to blending additives into a cured polymeric composition, further enhances the properties of the composition beyond what might have been anticipated based upon post blending experience. Possibly, the additives in some manner interact with the macromonomer and/or the reactive diluent whereas they will not so interact if blended into a radiation cured mixture of macromonomer and diluent.

Generally, the additives are non-reactive with the macromonomer, i.e., will not copolymerize therewith, and

should disperse well in the solution of macromonomer in reactive diluent. Preferably, the additives should dissolve in such solution and should not interfere in the dissolving of the macromonomer by the reactive diluent. At least 0.5% of additive based on total weight of composition may be used for efficacy.

ADHESIVE COMPOSITIONS

When the objective is to prepare adhesives, the radiation curable composition will contain at least about 5 wt.% of macromonomer, and the types and quantities of macromonomer, reactive diluent and additives are selected to obtain an acceptable $T_g$ in the cured product. For example, a $T_g$ no higher than about 25°C, preferably 10°C or less will provide a pressure sensitive adhesive. Alternately, a cured product having a Tg over 25°C, e.g., 50°C, will provide a hot-melt adhesive. Since many of the reactive diluents will have a lower $T_g$ than the macromonomer, the $T_g$ and thermoplasticity of the cured product can largely be controlled by selection of reactive diluent and amounts thereof.

For further enhancement of adhesive properties, or to modify the thermoplasticity provided by the macromonomer, one or both of an elastomeric base (preferably non-crystallizable) and a tackifier may be added to the radiation curable mixture of macromonomer in reactive diluent. Elastomeric materials are useful for making the cured product more impact resistant and to provide enhanced shear strength, elongation and modulus. Tackifiers are useful for more sharply delineating the liquid and solid phases of the cured composition, to improve adhesion or to

improve bonding to different substrates. From about 5 to 50% by weight of either the elastomeric base or of tackifying resin, based on total composition, are useful. If mixtures of elastomer and tackifier are used, the mixtures can vary from about 5 to 50% of either component.

Any elastomeric materials and tackifiers known in the art may be used. Among the elastomeric bases may be mentioned natural rubber and synthetic rubbery materials such as polyisobutylene, polyvinylisobutylether, neoprene, polyvinylbutyral, chlorosulfonated polyethylene, and various copolymers prepared from two or more of butadiene, acrylonitile, styrene, isoprene, and the like. Many other synthetic resins also have elastomeric properties and are useful as elastomeric additives, such as vinyl toluene resins and polyester resins. The elastomers and may be used singly or in admixture. Graft copolymers of the macromonomer (A) of the present invention and one or more comonomers may also be used as the elastomeric additive, including the graft copolymers disclosed in the Milkovich patent and the graft copolymeric adhesive compositions disclosed in European patent publication 104046 referred to above.

Suitable tackifying resins include any of the essentially saturated thermoplastic resin polymers known in the art for their tackifying properties, such as rosin esters, hydrogenated esters of rosin, modified rosin esters, esters of polymerized rosin, esters of hydrogenated rosin, hydrocarbon resins, polyalphamethylstyrene, alpha pyrene terpene resin, vinyl toluene/alphamethylstyrene copolymer resins, beta-pinene terpene resins, polycyclic hydrocarbon

resins, and the like. The hydrocarbon elastomers are preferred.

When radiation cured in accordance with the invention, the foregoing compositions with or without elastomeric base and/or tackifier, but preferably with such additives, produce high quality pressure sensitive adhesives having excellent lap-shear and other properties.

HEAT-SEALABLE FILMS AND MULTI-LAYERED PRODUCTS

The macromonomers when combined with low reactivity diluents such as the mono acrylates or methacrylates, will form, upon radiation curing, heat-sealable films having a melting range characterisic of polyvinyl aromatics, e.g., polystyrene. The films can be self-supporting or can be supported on any surface to which they will adhere, e.g., paper or other fibrous material, wood, particle board, plastic sheets of other films, and the like. They can also be used to bond one or more layers in multi-layered systems or laminates. For example, one side of a sheet of paper may be printed with a desired pattern and given a clear top coat, and the other side coated with a film-forming composition of the invention, the entire system then being cured by irradiation. This composite can then be heat-laminated onto rigid, semi-rigid or flexible substrates such as wood, particle board, metal or other films, with the films in contact with the substrate, to form a decorative surface or article. Cured, unsupported films can similarly be heatsealed to various substrates.

Radiation curable compositions of the invention will form heat-sealable films so long as they remain thermoplastic upon radiation cure. To in ıre thermoplasticity, no more than 10 wt. % of the reactive diluent, based on total radiation curable composition, should comprise polyethylenically unsaturated material, and preferably no more than about 5 wt. %. It may be desirable in some cases to add an elastomeric material and/or a tackifier to the film-forming composition prior to curing. As in the case of adhesives, films of the compositions can be radiation cured with a variety of radiation sources. High energy sources, such as electron beam, will require no free radical initiator in the composition. Lower energy sources, such as UV, will require an initiator, such as a photoinitiator in the case of UV-curing.

The films will be essentially tack-free, thus further enhancing their utility as heatsealable films. Tack-free quality is achievable in compositions containing tackifier and/or elastomer by careful selection of the type and amount of additive.

The films are formed, bonded to various substrates or laminated using processing techniques and conditions well-known in the adhesives and films industries.

EMBEDMENTS-FILLED SYSTEMS

The low-shrinkage characteristic of the radiation cured products produced from the polymerizable compositions of the invention makes them suitable as embedding compositions in various industries to the extent that radiation can penetrate and thereby cure the compositions. Specifically the compositions are useful in the electrical and electronics fields for the encasement of electrical and electronic circuity and parts, and as fillers for dental use and the

production of decorative or functional objects such as statuary, cast parts, and the like. "Embedding" as used herein generically includes casting (pouring a hardenable liquid into a mold containing a part to be embedded and removing the mold after hardening), potting (same as coating except the mold remains as an integral part of the hardened unit), impregnating (immersion of a part so that the hardenable liquid fills the interstices of the part), encapsulating (thickly coating a part with a hardenable liquid), and transfer molding (transfer of hardenable liquid under pressure into a mold containing the part to be embedded). Since the hardenable liquid (the radiation curable composition of the present invention) must be radiation cured in a form other than a thin film, either high energy irradiation (such as electron beam) is necessary for curing or the composition must contain a fairly low concentration (about 0.1-10 wt. % on total formulation) of photoinitiator if UV light is used for curing.

Viscosity of the curable compositions is also an important consideration. The viscosity must be sufficiently low so that the composition will flow completely around the part to be enbedded at processing temperature and pressure in the case of casting, potting and transfer molding. The viscosity should be even lower in the case of impregnating, but higher viscosity (along with thixotropy) is necessary for encapsulating to avoid run-off during cure.

Usually the radiation curable composition for such applications will contain sufficient polyethylenically unsaturated reactive diluent for substantial crosslinking

during the cure; however, useful products which remain totally thermoplastic but hard are also producible.

As fillers the radiation curable compositions can be used in polymer concrete, adhesives, sealants and bonding agents of all types; and can be admixed with silicate or fiberglass fillers, pigments, adhesion promoters, and flow control agents and a variety of other materials commonly employed in the manufacture of decorative articles, construction materials such as glazing, fiberboard and siding, embedded electronic and electronmechanical assemblies, and a host of other products.

Typically in the foregoing applications a base composition of about 10-75 wt. % of macromonomer in reactive diluent is first prepared and to this composition is added any other materials for obtaining the end use products desired. Alternatively, the base composition can be blended into another composition as a filler.

**COATINGS**

In radiation curable coatings, such as paints, lacquers and varnishes, the radiation curable compositions of the invention may be present as the major constitutent, such as a replacement for the oligomer in oligomer coatings, or may be present as an additive for improvement of certain properties, such as adhesion promotion in oligomer coatings. In the former application the macromonomer can amount to about 20-70 wt. % and the reactive diluent about 30-80 wt. %, based on total composition, the balance being flow promoters (wetting agents), pigment, coupling agents, slip agents, thixotropic agents, or other modifiers conventionally present in oligomer coatings. In the latter application, preferred ranges are about 2-10 wt. % of macromonomer, the balance being reactive diluents, oligomer and additives. The oligomer component of the coating compositions may comprise any of the base materials or bodying agents known for use in nonaqueous, radiation curable coatings. These include polyesters such as the polyethylene polyurethanes of U.S. Patent 4,183,796, the acrylic acid adducts of epoxidized phenolformaldehyde adducts, acrylic acid adducts of the diglycidyl ether of bisphenol A, acrylic acid adducts of soybean oil, the monohydroxy vinyl compound-epoxy adducts of U.S. Patent 4,025,548 wherein the vinyl compound may be a vinyl, allylic, acrylic or methacrylic material, crosslinkable oils and oligomers such as are described in U.S. Patent 3,912,670, and reaction products of 1-alkenes and acrylic derivatives such as described in U.S. Patent 4,009,195.

The coatings may be applied by any suitable means, such as spraying, dipping, flow coating, brushing, and the like, followed by or simultaneously with irradiation.

OTHER APPLICATIONS

Radiation curable compositions of the invention can also be formulated for extrusion coating of various substrates and articles such as wire, cables and coils. In these as well as in other coating applications, viscosity control and flow is important; consequently it may be desirable to add a flow control agent (also known as wetting or spreading agents) to the composition. Representative flow control agents particularly for extrusion applications, are cellulose acetate butyrate polymers, styrene-

allyl alcohol copolymers, polyvinylbutyrals and polyvinylethers such as the "Gantrez" maleic anydride copolymer resins sold by GAF Corporation. The radiation curing conditions can be selected for the specific system in accordance with criteria well known in the art. In these applications, for example, electron beam irradiation and three-dimensional curing are often used, due to the greater thickness of material to be cured.

The following examples will serve to illustrate the invention, but it is understood that these examples as well as other embodiments set forth in this specification are merely representative of the invention and do not necessarily limit the scope thereof. In the examples and throughout the specification and claims, all parts and percentages are by weight unless otherwise expressly stated.

MACROMONOMER PREPARATION

A glass and stainless steel reactor was charged with 1100 grams of cyclohexane, pre-dried over molecular sieves, and 400 grams of styrene purified over activated alumina. The reactor temperature was raised to 70°C and s-butyllithium solution (1.4M in cyclohexane) was slowly added until a persistant light reddish-orange color was obtained. An additional 100 ml (0.140 moles) of s-butyllithium was immediately added. Styrene was then pumped into the reactor for 30 minutes until a total of 1820 grams had been added. The temperature was maintained at 70°C for 30 minutes and then 12.3 grams of ethylene oxide (0.28 moles) was added causing the solution to become colorless. To the resulting solution was added 16.1 grams (0.154 moles) of methacryloyl chloride to give upon removal of

cyclohexane a macromolecular monomer of 13,000 molecular weight, measured by GPC, having the following structural formula:

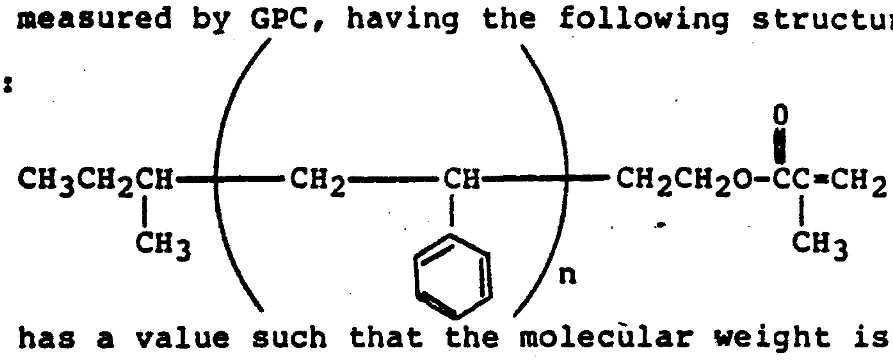

where n has a value such that the molecular weight is 13,000. In the following examples this macromonomer after purification as described below is identified as Macromonomer A.

In a similar synthesis, a macromonomer of the same structure was prepared but having a molecular weight, measured by GPC, of 4500. This macromonomer after purification as described below is designated Macromonomer B in the following examples.

Lithium chloride causes cloudiness in toluene solutions when the macromonomer is redissolved. The macromonomer product of each synthesis is therefore purified by dissolving solid macromonomer in toluene to form a 40 percent by weight solution. This solution is filtered through a half-inch bed of Celite 545 filter aid (Fisher) using water aspiraton suction. The filtered toluene/ Macromonomer solution is reprecipitated into excess methanol and vacuum dried. Chloride content is decreased from 7000 ppm to 460 ppm and lithium content from 487 ppm to 60 ppm by this filtering operation.

## EXAMPLE 1

Example 1-3 illustrate formation of heat-sealable films.

The following radiation-curable composition is

prepared by adding the omponents to a glass vessel, capping the vessel and placing it on a paint roller overnight.

| Ingredient | % by weight |
|---|---|
| Macromonomer A | 54 |
| 2,2-ethoxyethoxyethyl acrylate | 36 |
| long chain ($C_{16}$) diol diacrylate | 5 |
| Irgacure 500 photoinitiator[1] | 5 |

[1] 1:1 benzophenone:1-hydroxycyclohexylphenyl ketone (CibaGeigy Corp.)

The resulting clear, viscous solution is coated onto a Bonderite 37 treated, galvanized steel test panel to a 2-mil thickness. The coating is then cured by exposing it to ultraviolet radiation from a medium-pressure mercury arc lamp. The resultant film is tack-free, clear and flexible.

Kraft paper is heat-sealed to the film by heating the test panel to 300°F and pressure-applying the paper to the coated panel. Upon cooling, attempts were made to peel the paper off. All attempts to do so were unsuccessful, resulting in paper tear along the border of the coated film or in cohesive paper failure with massive amounts of paper fiber embedded into the surface of the film. This example thus illustrates the excellent hot-melt adhesive properties of the films.

EXAMPLE 2

To the formulation of Example 1 is added 20% of Stabelite Ester 10 tackifying resin (glycerol ester of hydrogenated rosin, Hercules, Inc.). This is accomplished by liquifying the resin with heat and while mixing under

low shear, slowly adding the formulation of Example 1 as a steady stream into the resin. As soon as the mixing is complete, the solution is cooled to room temperature to avoid excess heat. The resultant composition is coated onto a steel test panel, radiation cured and tested as in Example 1. Excellent heat-sealable film properties are demonstrated.

EXAMPLE 3

To the formulation of Example 2 is added 4% of pale crepe natural rubber. The formulation is then allowed to mix overnight on a paint roller. The resultant composition is coated onto a steel test panel, radiation cured and tested as in Example 1, indicating good film-forming properties and heat-sealability.

EXAMPLE 4

The following formulations demonstrated effective coatability on steel test panels as in Example 1 when applied to 1 mil thickness and radiation cured as in Example 1. These formulations are representative of oligomer type coating compositions in which the macromonomer replaces the conventional oligomer.

**MACROMONOMER A COATING**

| | % by weight |
|---|---|
| Macromonomer A | 40 |
| 1,6-hexanediol diacrylate | 47 |
| tetrahydrofurfuryl acrylate | 5 |
| trimethylolpropane triacrylate | 5 |
| Ganex V-516 wetting agent[1] | 1 |
| Irgacure 184 photoinitiator[2] | 2 |
| | 100 |

[1] 50% alkylated poly-N-vinylpyrrolidone in isopropanol (GAF Corp.)

[2] 1-hydroxycyclohexylphenyl ketone (Ciba-Geigy Corporation)

**Macromonomer B Coating**

| | % by weight |
|---|---|
| Macromonomer B | 50 |
| 1,6-hexanediol diacrylate | 37 |
| tetrahydrofurfuryl acrylate | 5 |
| trimethylolpropane triacrylate | 5 |
| Ganex V-516 wetting agent | 1 |
| Irgacure 184 photoinitiator | 2 |
| | 100 |

## EXAMPLE 5

This example illustrates a casting application. A glass cell constructed of two 1/16 inch glass plates spaced apart in parallel to form a 40 mil cavity is injected with the formulation described in Example 1. The cell is passed at a rate of 100 ft./min. twice through UV light from a mercury arc lamp at an intensity of 300 watts/linear inch, one pass for each side of the cell. An excellent hard, clear casting is produced.

EXAMPLE 6

This example illustrates use of radiation curable compositions of the invention for adhesion promotion in coating compositions.

The following formulation is prepared in the manner described in Example 1:

| | wt. % |
|---|---|
| Acrylated bisphenol A epoxy | 50 |
| Macromonomer B | 4 |
| 1,6-hexanediol diacrylate | 40 |
| Trimethylolpropane triacrylate | 4 |
| Irgacure 651 photoinitiator[1] | 2 |
| | 100 |

[1] 2,2-dimethoxyl-2-phenylacetophenone (Ciba-Geigy)

The formulation is applied to steel test panels to 2 mil thicknesses and radiation cured as described in Example 2. Improved adhesion of the resulting films, as compared to that obtainable with a control formulation lacking Macromonomer B, is obtained as determined by ASTM D3359 Adhesion Tape Test, Method B: Cross-Cut Tape Test.

EXAMPLE 7

This example illustrates pressure sensitive adhesive applications of the invention.

The following mixture is prepared:

| | wt. % |
|---|---|
| Macromonomer B | 15 |
| Pale crepe natural rubber | 5 |
| 2,2-ethoxyethoxyethyl acrylate | 50 |
| Stabelite Ester 10 tackifying resin | 25 |
| Irgacure 651 photoinitiator | 5 |
| | 100 |

The formulation is blended overnight on a paint roller, cast onto polyester film to a 2.0 ± 0.1 mil film thickness (dry), and radiation cured as described in Example 1. The cured films are then applied to test film backings as described in Monsanto Pressure-Sensitive Adhesive Test Procedures Part I: Monsanto Test Conditions, and tested for tackiness according to Part VI: Thumb Tack Test, of the same test procedure. The films exhibit excellent tack under thumb pressure. The adhesive compositions also demonstrate good lap-shear performance as measured by a laboratory modified tensile tester.

EXAMPLE 8

The shrinkage properties of cured products of the invention were investigated by preparing the following formulations varying in macromonomer oligomer component from about 20 to 60 wt. % wherein formulation (4) is a control:

| | Test Formulations (wt. %) | | | |
|---|---|---|---|---|
| | (1) | (2) | (3) | (4) |
| Macromonomer A oligomer | 19-59 | | | |
| Macromonomer B oligomer | | 19-59 | | |
| HDODA[1] diluent | 39-79 | 39-79 | 39-79 | 98 |
| Irgacure 184 photoinitiator | 2 | 2 | 2 | 2 |
| Acrylated bisphenol A epoxy[2] | | | 19-59 | |

[1] 1,6-hexanediol diacrylate.

[2] Oligomer of about $2 \times 10^8$ cps viscosity

The formulations were injected into glass cells and radiation cured substantially as described in Example 5 to form clear, hard castings. The castings were broken up and their specific gravities determined by displacement of water in a pycnometer. The differences in specific gravity of each formulation before and after curing expressed as percentages was taken as a measure of shrinkage. The results are given in Table I from which it will be noted that as compared with formulation (3), which primarily comprises an oligomer solution commonly used in radiation curable compositions, the compositions of the invention, containing either Macromonomer A or Macromonomer B as oligomer, exhibited substantially lower shrinkage.

TABLE I

| | Difference in Specific Gravity, % wt. % oligomer, approximate | | | |
|---|---|---|---|---|
| Formulation | 0 | 20 | 40 | 60 |
| (1) | 14.3 | 8.9 | (5.1) | 2.3 |
| (2) | 14.3 | 10.0 | (7.0) | 4.7 |
| (3) | 14.3 | (12.2) | (10.3) | 9.7 |
| (4) | 14.3 | - | - | |

( ) = by extrapolation

In summary, it will be apparent to those skilled in the art that numerous modifications may be made in the various embodiments of the invention described above without departing from the spirit or scope of the invention. Thus, various auxiliary materials may be added to the radiation curable compositions, such as rheology control agents (e.g. silica gel or other thickener or filler), antioxidants, color stabilizers, dyes, pigments and other colorants, flatting agents, radiopaquing agents, impact modifiers, and the like. As coatings, adhesives and films the compositions can be used as paints, varnishes, lacquers, co-elastomers with other elastomers, sealants, binders or impregnating agents for wood, paper and other fibrous materials, solder resists, and as protective coatings or interlayers for glass, transformer coils and metals or films of all kinds. Moreover, the compositions before or after radiation curing can be topcoated with organic solvent based coatings or water-based coatings, and can be applied as prime coats, base coats or single coat systems. The compositions can also be used in printing plates, imaging materials, magnetic media, and in embossing materials and processes. Lastly, as embedding and casting materials, the compositions can be tailored to meet the requirements of various industries such as dentistry, the medical arts and electronics.

**CLAIMS:**

1. A radiation curable composition consisting essentially of a mixture of:

(A) about 5-80% by weight of a thermoplastic macromonomer of the formula:

$$R\text{-}(Z)_n\text{-}X$$

wherein R is a hydrocarbon group containing up to about 20 carbon atoms, Z is a vinyl aromatic monomer, n is a positive integer such that the number average molecular weight of $(Z)_n$ is about 2,000-50,000, and X is a polymerizable ethylenically unsaturated end group;

(B) about 20-95% by weight of a free radical polymerizable reactive diluent;

(C) 0 to about 10% by weight of a radiation responsive free radical initiator; and

(D) 0 to about 80% by weight of a nonreactive additive selected from an elastomer base, a tackifying resin, a flow control material, an oligomeric bodying material and mixtures of two or more thereof.

2. The composition of claim 1 wherein, in the formula $R\text{-}(Z)_n\text{-}X$, X is selected from:

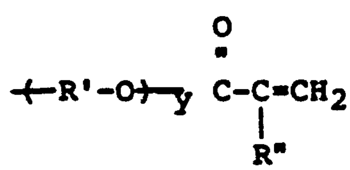

$$-(R'-O)_y-C=CH_2$$
$$\quad\quad\quad\quad |$$
$$\quad\quad\quad\quad R''$$

$$-(C_pH_{2p})-C=CH_2$$
$$\quad\quad\quad |$$
$$\quad\quad\quad R''\quad O$$
$$\quad\quad\quad\quad\quad \|$$
$$-CH_2C\ (C_6H_5)_2\ CH_2-C-O-CH=CH_2$$

$$-CH_2C_6H_4\ CH=CH_2 \text{ and}$$

$$\quad\quad O\quad\quad\quad\quad O$$
$$\quad\quad \|\quad\quad\quad\quad \|$$
$$-CH_2CH_2O\ C-CH=CH-C-OH$$

wherein R' is phenylethylene or $C_m H_{2m}$, m is 2, 3, or 4, p is a positive integer of from 2 to 8, y is a positive integer of from 1 to 50, and R" is hydrogen or lower alkyl.

3. The composition of claim 1 wherein, in the formula $R(Z)_nX$, R is lower alkyl, Z is styrene and

$$\quad\quad\quad\quad\quad O$$
$$\quad\quad\quad\quad\quad \|$$
X is $-CH_2CH_2OCC=CH_2$ where R" is hydrogen or methyl.
$$\quad\quad\quad\quad\quad\quad |$$
$$\quad\quad\quad\quad\quad\quad R''$$

4. The composition of claim 1, claim 2 or claim 3 wherein the amount of (C) is about 0.5 to about 10%.

5. The composition of any one of claims 1 to 4 wherein (B) is a mixture of at least one monoethylenically unsaturated compound and at least one polyethylenically unsaturated compound.

6. The composition of claim 5 wherein the polyethylenically unsaturated compound of (B) is selected from an alkane diol diacrylate, an aliphatic polyacrylate, an alkoxylated aliphatic polyacrylate, a polyether glycol diacrylate and mixtures thereof.

7. The composition of claim 5 or claim 6 wherein (D) is a mixture of about 5-50% by weight of an elastomer base and about 5-50% by weight of a tackifying resin.

8. The composition of any one of claims 1 to 6 wherein (D) is selected from about 5-50% by weight of an elastomer base, about 10-45% by weight of a tackifying resin and a mixture thereof.

9. The composition of any one of claims 1 to 8 wherein the amount of (D) is at least 1% by weight.

10. A polymerisation process which comprises subjecting to actinic radiation a composition as claimed in any one of claims 1 to 9.

11. A method of coating a substrate which comprises applying to the substrate a composition as claimed in any one of claims 1 to 9 and curing the composition on the substrate by exposure to actinic radiation.

12. An article of manufacture comprising a substrate having applied thereto a radiation cured composition of any one of claims 1 to 9.

13. A heat-sealable film comprising a radiation cured film of the composition of any one of claims 1 to 9.

14. A heat-laminatable sheet comprising a flexible substrate having applied thereto a radiation cured flow of the composition of any one of claims 1 to 9, a print layer on the obverse side of the flexible substrate, and a clear top layer on the print layer.